# EUROPEAN PATENT SPECIFICATION

(11) **EP 3 302 891 B1**
(45) Date of publication and mention of the grant of the patent: **04.11.2020**
(21) Application number: 16804517.7
(22) Date of filing: 03.06.2016
(51) Int. Cl.: B25F 5/02, H02K 7/14, H02K 11/20

(54) **POWER TOOL USER INTERFACES**
ELEKTROWERKZEUGBENUTZERSCHNITTSTELLE
INTERFACES UTILISATEUR D'OUTIL ÉLECTRIQUE

(30) Priority: 05.06.2015 US 201562171706 P
(43) Date of publication of application: 11.04.2018
(73) Proprietor: Ingersoll-Rand Industrial U.S., Inc., Davidson, NC 28036 (US)
(72) Inventor: MADINENI, Vikram, Somerset, New Jersey 08873 (US); JOHNSON, Joshua Odell, Allentown, Pennsylvania 18104 (US); LEAVITT, Douglas Fornell, Bethlehem, Pennsylvania 18017 (US); BARTOSZEK, Jason Christopher, Bethlehem, Pennsylvania 18020 (US); ELY, Sean C., Flemington, New Jersey 08822 (US)
(74) Representative: Haseltine Lake Kempner LLP
(86) International application number: PCT/US2016/035698
(87) International publication number: WO 2016/196918

(56) References cited:
- WO-A1-2014/108110
- WO-A1-2014/108110
- WO-A1-2014/124859
- DE-A1-102008 020 173
- US-A- 3 336 490
- US-A- 4 510 404
- US-A- 5 014 793
- US-A- 5 365 155
- US-A- 5 712 543
- US-A1- 2006 012 584
- US-A1- 2008 048 650
- US-A1- 2009 200 053
- US-A1- 2013 193 891
- US-A1- 2013 269 961
- US-A1- 2013 274 797
- US-A1- 2013 292 147
- US-A1- 2013 313 925
- US-A1- 2013 327 552
- US-A1- 2014 100 687

## Description

### RELATED APPLICATION

The present application relates to and claims priority to U.S. Provisional Patent Application, Serial No. 62/171,706, filed on June 5, 2015, and U.S. Patent Application, Serial No. 15/172,284, filed June 3, 2016, entitled "Power Tool User Interfaces."

### BACKGROUND ART

US 2009/200053 discloses a power tool having a printed circuit board towards the rear of the power tool and a controller positioned at the rear of the power tool and a microcontroller that receives user input from the controller.
US 2013/193891 discloses a cordless power tool with a plurality of circuit boards with an onboard tool display that includes programmable input buttons.
US 2013/0313925 discloses a power tool with a combined printed circuit board that reduces internal wiring of the power tool and provides a large amount of air flow to internal components.
US 4510404A discloses an electronic control board implemented by a printed circuit board and is supported on a flexible lens or bezel which may be flexed to allow insertion, so as to be retained. The edges of the bezel are received in the interior periphery of an opening in a support housing, which opening is closed off by the bezel and by a cap which retains the exposed periphery of the bezel in its interior portion.
DE 10 2008 020173 discloses a power tool for drilling hard materials and has a manually operable control device for unidirectional operational control of an electric motor, the control device includes electronic push-buttons which each include an illuminant for functional display.
WO 2014/108110 discloses a power tool with a switching element of large volume intended to provide that the power tool can be sensitively controlled in a dynamic manner using work gloves while at the same time simplifying the operator control processes.

### TECHNICAL FIELD AND SUMMARY

The present disclosure relates, generally, to power tools and, more particularly, to user interfaces for power tools.

User interfaces for power tools sometimes include controls for regulating power supplied to electric motors of the power tools. For instance, such user interfaces may include one or more switches or knobs that are movable between positions to adjust the power supplied to the motive source or electric motor. Some power tools may include features that guide movement of the switches between the positions and provide feedback to a user regarding the positional state of the switches.

To that end, an illustrative embodiment of the present disclosure provides hand-held power tool which comprises a motive source, an output shaft, an endbell, a user interface, a printed circuit board (PCB), a plurality of sensors, and one or more sensor actuators. The output shaft protrudes from an output end of the motive source. The output shaft is functionally coupled to the motive source such that the output shaft rotates in response to activation of the motive source when the motive source is supplied with power. The endbell is located adjacent the motive source opposite the output shaft. The user interface is movable among a plurality of mode positions to select one of a plurality of operation modes of the motive source. The user interface includes a control knob accessible from the exterior of the housing assembly. The control knob is located adjacent the endbell opposite the output shaft, and rotatable about a knob axis to a plurality of mode positions that correspond to the plurality of operation modes. The PCB is located between the endbell and the control knob, wherein the PCB is configured to control the plurality of operation modes of the motive source. The plurality of sensors are positioned on an outer side of the PCB. Each of the plurality of sensors identifies a location of one of the plurality of mode positions. One or more of the sensor actuators are located on the control knob. Each of the one or more sensor actuators are located on the control knob movable to a position that corresponds to one of the plurality of sensors that correspond to a location of one of the plurality of mode positions. And lastly, the plurality of sensors and the one or more sensor actuators do not physically make contact.

In the above and other embodiments of the present disclosure may also comprise: the plurality of sensors being Hall-effect sensors; the one or more sensor actuators are at least one magnet, wherein the at least one magnet is selectively locatable adjacent one of the plurality of Hall-effect sensors that corresponds to the location of one of the plurality of mode positions; the one or more sensor actuators is a magnet, wherein the magnet is selectively locatable adjacent one of the plurality of Hall-effect sensors, wherein a magnetic field generated by the magnet when located adjacent a first of the plurality of Hall-effect sensors excites the first of the plurality of Hall-effect sensors to indicate to a controller on the hand-held power tool to operate in a first operation mode of the plurality of operation modes, wherein a magnetic field generated by the magnet when located adjacent a second of the plurality of Hall-effect sensors excites the second of the plurality of Hall-effect sensors to indicate to the controller on the hand-held power tool to operate in a second operation mode of the plurality of operation modes, and wherein a magnetic field generated by the magnet when located adjacent a third of the plurality of Hall-effect sensors excites the third of the plurality of Hall-effect sensors to indicate to the controller on the hand-held power tool to operate in a third operation mode of the plurality of operation modes; when the control knob is located at a fourth mode position, the magnet is not located adjacent any of the plurality of Hall-effect sensors and thus, does not excite any of the plurality of Hall-effect sensors, wherein this lack of excitement of any of the plurality of Hall-effect sensors indicates to the controller on the hand-held power tool to operate in a fourth operation modes of the plurality of operation modes; when the control knob is located at a fourth mode position, the magnet is positioned adjacent a fourth Hall-effect sensor, wherein the magnetic field generated by the magnet excites the fourth Hall-effect sensor to indicate to the controller on the hand-held power tool to operate in a fourth mode of operation of the plurality of operation modes; and the one or more sensor actuators located on the control knob are composed of two magnets and the plurality of sensors on the PCB are composed of two Hall-effect sensors that correspond to define four operation modes of the plurality of operation modes.

Another illustrative embodiment of the present disclosure provides a hand-held power tool which comprises a motive source, an output shaft, an endbell, a user interface, a PCB, a potentiometer, and a plunger. The output shaft protrudes from an output end of the motive source. The output shaft is functionally coupled to the motive source such that the output shaft rotates in response to activation of the motive source when the motive source is supplied with power. The endbell is located adjacent the motive source opposite the output shaft. The user interface is movable among a plurality of mode positions to select one of a plurality of operation modes of the motive source, and includes a control knob accessible from exterior of the housing assembly. The control knob is located adjacent the endbell opposite the output shaft, and is rotatable about a knob axis to a plurality of mode positions that correspond to a plurality of operation modes. The PCB is located between the endbell and the control knob, and is configured to control the plurality of operation modes of the motive source. The potentiometer is located on the PCB wherein the potentiometer is located adjacent the control knob. The plunger is located on the control knob and directed toward the potentiometer. The plunger interacts with the potentiometer and is configured to change an output current based on a variable resistance created by a relative location of the plunger with respect to the potentiometer.

In the above and other embodiments of the present disclosure may also comprise: the potentiometer being an arcuate potentiometer; a membrane located between the potentiometer and the plunger; the plunger being positioned on the control knob such that the plunger contacts the membrane and configured to change the resistance of the potentiometer based on the relative location of the plunger with respect to the potentiometer and the membrane; when the plunger contacts the membrane at a first position the potentiometer has a first resistance that is sent to a controller to indicate a first operation mode of the plurality of operation modes, wherein when the plunger contacts the membrane at a second position the potentiometer has a second resistance that is sent to the controller to indicate a second operation mode of the plurality of operation modes, wherein when the plunger contacts the membrane at a third position the potentiometer has a third resistance that is sent to the controller to indicate a third operation mode of the plurality of operation modes, and wherein when the plunger contacts the membrane at a fourth position the potentiometer has a fourth resistance that is sent to the controller to indicate a fourth operation mode of the plurality of operation modes; and the plunger and the potentiometer are adapted to withstand vibrations caused by operation of the hand-held power tool.

Another illustrative embodiment of the present disclosure provides hand-held power tool which comprises a motive source, an output shaft, an endbell, a user interface, and a PCB. The output shaft protrudes from an output end of the motive source. The output shaft is functionally coupled to the motive source such that the output shaft rotates in response to activation of the motive source when the motive source is supplied with power. The endbell is located adjacent the motive source opposite the output shaft. The user interface is movable among a plurality of mode positions to select one of a plurality of operation modes of the motive source. The user interface is also accessible from exterior of the housing assembly, and is located adjacent the endbell opposite the output shaft. The user interface adjusts operation of the hand-held power tool to the plurality of operation modes. The PCB is located between the endbell and the user interface, and is configured to interact with the user interface to select one of the plurality of operation modes of the motive source.

In the above and other embodiments of the present disclosure may also comprise: the user interface being selected from the group consisting of a control knob, dial, push button, switch, lever, and touch screen; the PCB includes a plurality of sensors positioned on the PCB wherein each of the plurality of sensors identifies a location of one of the plurality of mode positions; one or more sensor actuators located on the user interface, wherein the one or more sensors are movable to a position that corresponds to one of the plurality of sensors that correspond to a location of one of the plurality of mode positions; a potentiometer located on the PCB wherein the potentiometer is directed to the user interface, and a plunger in communication with the user interface and interacts with the potentiometer; and wherein the potentiometer is configured to change an output current based on a variable resistance created by a relative location of the plunger with respect to the potentiometer; and the PCB includes a shield to mitigate interference to the motive source.

Another illustrative embodiment of the present disclosure provides hand-held power tool which comprises: a motor, a user interface, and one or more sensors. The motor includes a PCB configured to support electrical components of the motor. The user interface is movable between a plurality of mode positions to select one of a plurality of operational modes of the motor. And one or more sensors are mounted on the PCB and are configured to detect the plurality of mode positions of the user interface.

### BRIEF DESCRIPTION OF THE DRAWINGS

The concepts described in the present disclosure are illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels may be repeated among the figures to indicate corresponding or analogous elements.
FIG. 1 is a side elevation view of an illustrative power tool including a tool housing;
FIG. 2 is a perspective view of a user interface provided on a rear portion of the tool housing of the power tool of FIG. 1 with remaining portions of the tool housing omitted for the sake of clarity;
FIG. 3 is a magnified sectional view, taken about line 3-3 of FIG. 2, of an embodiment of a sensor system supported by the rear portion of the power tool;
FIG. 4 is a magnified sectional view, taken about line 3-3 of FIG. 2, of another embodiment of the sensor system supported by the rear portion of the power tool; and
FIG. 5 is a magnified sectional view, taken about line 4-4 of FIG. 2, of the sensor system of FIG. 4.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives falling within the spirit and scope of the present disclosure.

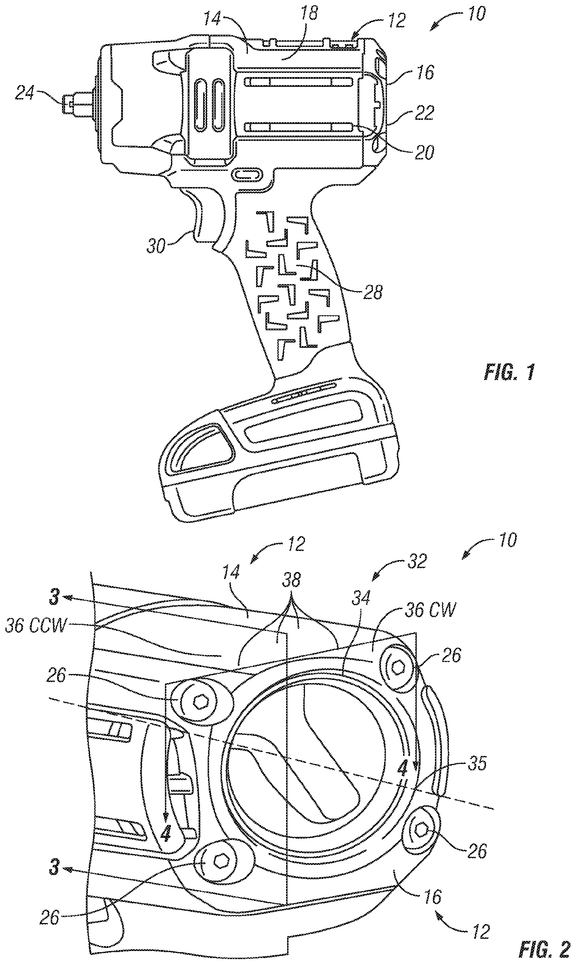

Referring now to FIG. 1, an illustrative power tool 10 is shown. The power tool 10 is illustratively embodied as a cordless, electric power tool. In particular, the power tool 10 is shown in FIG. 1 as a pistol-grip style cordless electric impact tool, which includes an impact mechanism in-line with an output of the tool. It should be appreciated, however, that in other embodiments, the power tool may be embodied as another type of impact tool or as a cordless, electric power tool that does not include an impact mechanism, such as an electric drill, drill driver, ratchet, saw, or the like.

The illustrative power tool 10 includes a tool housing 12 as shown in FIG. 1. The tool housing 12 includes a body 14 and a cap 16. The body 14 defines an interior space 18 in which a motive source 20 of the power tool 10 is positioned. The cap 16 is coupled to the body 14 when the power tool 10 is assembled to close off the interior space 18 and define an end 22 that is positioned opposite an output end 24 of the power tool 10. The cap 16 is coupled to the body 14 using fasteners 26 (best seen in FIG. 2) that extend through the cap 16 and into the interior space 18. It is appreciated that motive source 20 may be an electric motor (either corded or cordless) or a pneumatic air motor.

The tool housing 12 defines a handle 28 on which a trigger 30 is provided as shown in FIG. 1. The trigger 30 is used to turn the motive source 20 on/off in use of the power tool 10. It is appreciated that the trigger may include a button, be touch sensitive, or employ a like switch. A user interface 32 spaced from the trigger 30 is also provided on the tool housing 12, specifically on the cap 16, as best seen in FIG. 2. In the illustrative embodiment, the user interface 32 is used to select one of a plurality of modes of operation of the power tool 10. For instance, in some embodiments, the user interface 32 may be used to select a particular mode of operation from among those described in U.S. Provisional Patent Application Serial No. 62/171,504, filed June 5, 2015. In other embodiments, the user interface 32 may simply regulate the maximum power supplied to the motive source 20 when the trigger 30 is fully depressed in use of the power tool 10.

Referring now to FIG. 2, the user interface 32 is shown in greater detail. The user interface 32 is supported by the tool housing 12 and is illustratively embodied as, or otherwise includes, a control knob 34. It should be appreciated, however, that in other embodiments, the user interface 32 may be embodied as a dial, push button, switch, or other control, and the dial, push button, switch, or other control, as well as components associated therewith, may be supported by the tool housing 12.

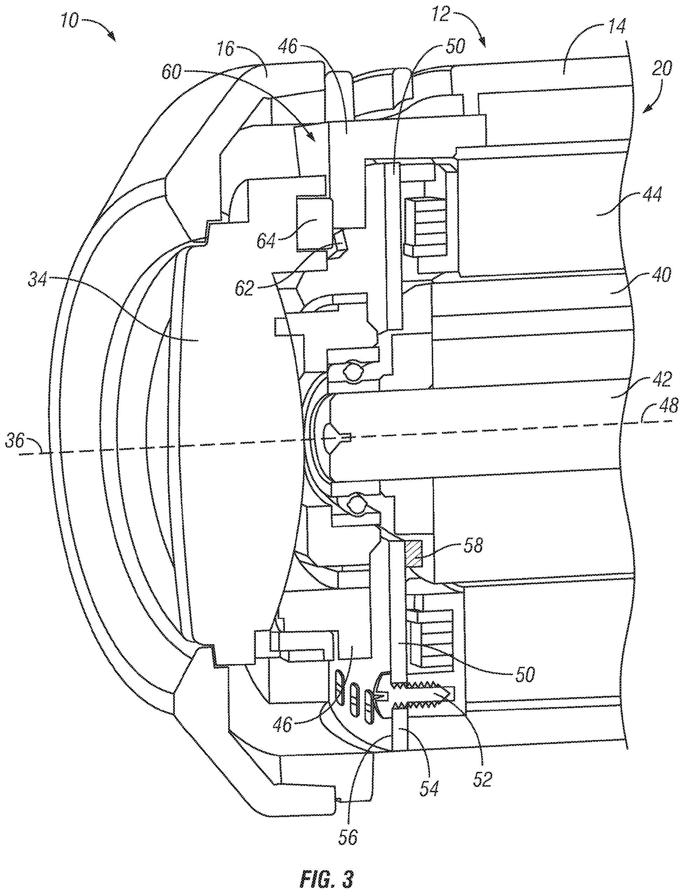

The control knob 34 is accessible from the exterior of the tool housing 12, and the control knob 34 is engaged with the cap 16 (best seen in FIG. 3) and rotatable about a knob axis 36 between a number of mode positions 38. Operation of the motive source 20 when the control knob 34 is in one of the mode positions 38 is different from the operation of the motive source 20 when the control knob 34 is in any of the other mode positions 38. In the illustrative embodiment, the mode positions 38 include four different positions. It should be appreciated, however, that in other embodiments, the control knob 34 may be moved between more or less than four mode positions 38.

Referring now to FIG. 3, the body 14 and the cap 16 of the tool housing 12 are broken away to show components of the motive source 20. The motive source 20 is illustratively embodied as a brushless DC electric motor. The motive source 20 includes a rotor 40 configured to drive an output shaft 42 to output mechanical power and a stationary component (i.e., a stator) 44 that extends around the rotor 40.

Motive source 20 such as a motor also includes a rear endbell 46 that abuts the control knob 34 and front endbell (not shown) that is spaced from the rear endbell 46 and positioned closer to the output end 24 of the power tool 10 than the rear endbell 46. The rotor 40 and the stator 44 are positioned between the two endbells. The front endbell and the rear endbell 46 cooperate to align the rotor 40 and the stator 44 so that the rotor 40 and the stator 44 extend parallel to a central axis 48 of the motor 20. The rear endbell 46 illustratively includes piloting features and indexing features that interface with the control knob 34, as shown and described in U.S. Provisional Patent Application Serial No. 62/171,673, filed June 5, 2015. The piloting features interface with the control knob 34 to guide rotation of the control knob 34 relative to the tool housing 12 about the knob axis 36 between the mode positions 38.

Motive source 20 includes a printed circuit board (PCB) 50 positioned near the rear endbell 46 and configured to provide motor control of the motive source 20. Typically, the PCB 50 is used to support electrical components of the motive source 20, such as sensors used to detect rotor position and terminals for the motor windings. The illustrative PCB 50 is annular in shape and fixed to the motor 20 with one or more fasteners 52. The PCB 50 includes an outer side 56 configured to face the rear endbell 46 and an opposing inner side 54. The terminals for the motor windings (not shown) are positioned on the inner side 54 of the PCB 50. Additionally, in some embodiments, rotor position sensors 58 (e.g., Hall-effect sensors) are positioned on the inner side 54 of the PCB 50 near the rotor 40 and are configured to detect the position of the rotor 40.

As illustrated in FIG. 3, a sensor system 60 for determining the mode position 38 of the control knob 34 is integrated into the PCB 50 and the control knob 34. The sensor system 60 is configured to detect an input selected by the user via the control knob 34 and communicate that selection to a controller of the power tool 10. The sensor system 60 includes one or more sensors 62 positioned on the outer side 56 of the PCB 50 and one or more sensor actuators 64 positioned on the control knob 34. In the illustrative embodiment shown in FIG. 3, the one or more sensors 62 are embodied as Hall-effect sensors 62 positioned on the outer side 56 of the PCB 50 at locations corresponding to several mode positions 38 of the control knob 34. Additionally, in the illustrative embodiment of FIG. 3, the one or more sensor actuators 64 are embodied as one or more permanent magnets 64 configured to generate magnetic fields that induce a voltage response in the corresponding Hall-effect sensors 62. By incorporating the sensor system 60 directly into the PCB 50, the complexity of the power tool 10 may be reduced by eliminating an additional PCB board associated solely with the user interface 32 of the power tool 10. Because the illustrative Hall-effect sensors 62 are contactless, the user interface 32 of the power tool 10 may be better able to withstand the vibrational forces induced by the illustrative impact tool. In embodiments using Hall-effect sensors for both the sensor system 60 of the user interface 32 and the rotor position sensors 58 of the motor 20, the PCB 50 may include shielding (e.g., steel shielding) to prevent interference between the permanent magnets 64 of the control knob 34 and the rotor position sensors 58.

In the illustrative embodiment, three Hall-effect sensors 62 are mounted on the outer side 56 of the PCB 50 and a single permanent magnet 64 is positioned in the control knob 34 adjacent to the outer side 56 of the PCB 50. The piloting and indexing features of the control knob 34 are configured to position the permanent magnet 64 near the corresponding Hall-effect sensor 62 that corresponds to a particular mode position 38. For example, when the control knob 34 is in a first mode position 38, the magnet 64 is adjacent to a first Hall-effect sensor 62 and the magnetic field generated by the magnet 64 excites the first Hall-effect sensor 62 to indicate to the controller of the power tool 10 to operate in a first mode of operation. Similarly, a second mode position 38 corresponds to a second Hall-effect sensor 62 and a third mode position 38 corresponds to a third Hall-effect sensor 62. When the control knob 34 is in a fourth mode position 38, the magnet 64 is not positioned to excite any of the three Hall-effect sensors 62. The controller of the power tool 10 causes the motive source 20 to operate in a fourth mode of operation when no signal from any Hall-effect sensor is detected. It should be appreciated that the first, second, third, and fourth mode positions 38 need not be positioned in sequential order in the power tool 10. In an alternate embodiment for forth mode position 38, magnet 64 may be positioned adjacent a fourth Hall-effect sensor 62 where the magnetic field generated by magnet 64 excites fourth Hall-effect sensor 62 to indicate to the controller of power tool 10 to operate in the fourth mode of operation. In illustrative embodiments, a different configuration of sensor actuators 64 and sensors 62 may be used. For example, the control knob 34 may include two permanent magnets 64 and the PCB 50 may include two Hall-effect sensors 62 that cooperate to define four separate modes of operation of the power tool 10. It will also be appreciated that the user interface 32 may be designed to have any number of mode positions 38.

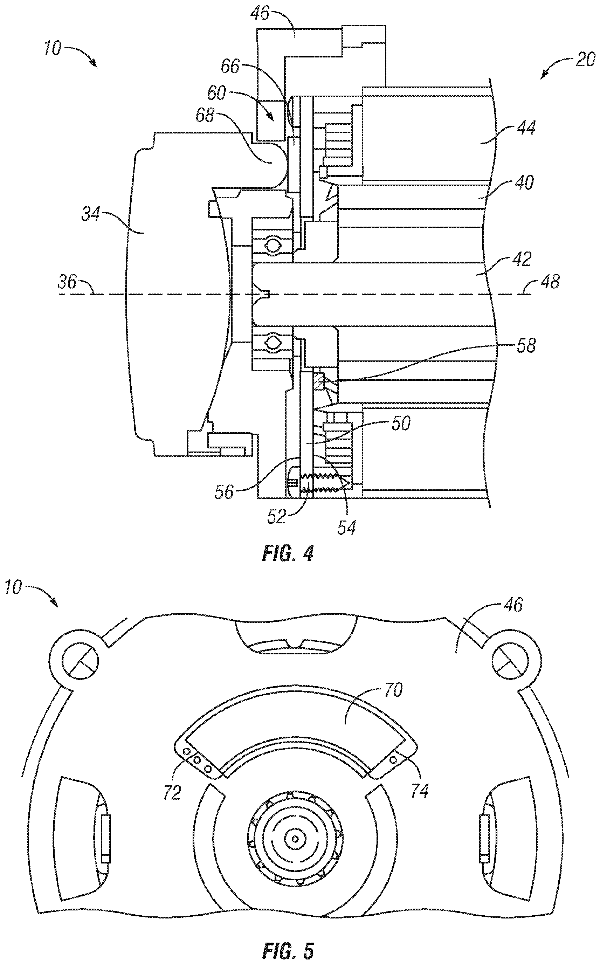

FIGS. 4 and 5 show another embodiment of the sensor system 60 where the one or more sensors 62 include an arcuate potentiometer 66 and the one or more sensor actuators 64 include a plunger 68. The potentiometer 66 is positioned on the outer side 56 of the PCB 50 and includes a membrane 70 that includes a first end 72 and a second end 74. The potentiometer 66 is configured to change an output current based on a variable resistance determined by the interaction of the plunger 68 with the membrane 70. The plunger 68 is positioned on the control knob 34 such that it contacts the membrane 70 and is configured to change the resistance of the potentiometer 66 based on the location of the plunger 68 on the membrane 70. For example, if the plunger 68 is contacting the membrane 70 at the first end 72, the potentiometer 66 may have a first resistance that the controller interprets to indicate that the power tool 10 is to operate in a first mode of operation. Similarly, different locations of the plunger 68 on the membrane 70 cause the potentiometer 66 to have a second, third, or fourth resistance that corresponds to a second, third, or fourth mode of operation respectively. As noted above, it should be appreciated that, in some embodiments, the power tool 10 may include more (or less) than four mode positions 38 and more (or less) than four modes of operation that the user may select. Both the Hall-effect sensor embodiment of the sensor system 60 and the potentiometer embodiment of the sensor system 60 are adapted to withstand the vibrations that may be present in an impact tool.

In other embodiments, the sensor system 60 may be embodied as magnetic transducers (e.g., Hall-effect sensors, switches, angle sensors etc.), linear and rotary membrane potentiometers, or mechanical contacts which would be used for detecting the mode of operation selected by the user and communicating that selection to the controller of the power tool 10.

While certain illustrative embodiments have been described in detail in the figures and the foregoing description, such an illustration and description is to be considered as exemplary and not restrictive in character, it being understood that only illustrative embodiments have been shown. There are a plurality of advantages of the present disclosure arising from the various features of the apparatus, systems, and methods described herein. Those of ordinary skill in the art may readily devise their own implementations of the apparatus, systems, and methods that incorporate one or more of the features of the present disclosure.

## Claims

1. A hand-held power tool (10) comprising:
a motive source (20);
an output shaft protruding from an output end (24) of the motive source (20);
wherein the output shaft is functionally coupled to the motive source (20) such that the output shaft rotates in response to activation of the motive source (20) when the motive source (20) is supplied with power;
an endbell (46) located adjacent the motive source (20) opposite the output shaft;
a user interface (32) movable among a plurality of mode positions to select one of a plurality of operation modes of the motive source (20);
wherein the user interface (32) is accessible from exterior of the housing assembly;
wherein the user interface (32) is located adjacent the endbell (46) opposite the output shaft;
wherein the user interface (32) adjusts operation of the hand-held power tool (10) to the plurality of operation modes; and **characterized by**:
a printed circuit board (PCB) (50) located between the endbell (46) and the user interface;
wherein the PCB (50) is configured to interact with the user interface (32) to select one of the plurality of operation modes of the motive source and wherein the PCB (50) includes a plurality of sensors positioned on the PCB (50) wherein each of the plurality of sensors identifies a location of one of the plurality of mode positions;
further comprising one or more sensor actuators (64) located on the user interface (32), wherein the one or more sensor actuators (64) are movable to a position that corresponds to one of the plurality of sensors that correspond to a location of one of the plurality of mode positions;
wherein the user interface (32) includes a control knob (34) which is rotatable about a knob axis to the plurality of mode positions;
wherein the one or more sensor actuators (64) are located on the control knob (34); and
wherein the plurality of sensors and the one or more sensor actuators (64) do not physically make contact.

2. The hand-held power tool (10) of Claim 1, wherein the plurality of sensors are Hall-effect sensors (62).

3. The hand-held power tool (10) of Claim 2, wherein the one or more sensor actuators (64) are at least one magnet, wherein the at least one magnet is selectively locatable adjacent one of the plurality of Hall-effect sensors (62) that corresponds to the location of one of the plurality of mode positions.

4. The hand-held power tool (10) of Claim 2, wherein the one or more sensor actuators (64) is a magnet, wherein the magnet is selectively locatable adjacent one of the plurality of Hall-effect sensors (62), wherein a magnetic field generated by the magnet when located adjacent a first of the plurality of Hall-effect sensors (62) excites the first of the plurality of Hall-effect sensors (62) to indicate to a controller on the hand-held power tool (10) to operate in a first operation mode of the plurality of operation modes, wherein a magnetic field generated by the magnet when located adj acent a second of the plurality of Hall-effect sensors (62) excites the second of the plurality of Hall-effect sensors (62) to indicate to the controller on the hand-held power tool (10) to operate in a second operation mode of the plurality of operation modes, and wherein a magnetic field generated by the magnet when located adjacent a third of the plurality of Hall-effect sensors (62) excites the third of the plurality of Hall-effect sensors (62) to indicate to the controller on the hand-held power tool (10) to operate in a third operation mode of the plurality of operation modes.

5. The hand-held power tool (10) of Claim 4, wherein when the control knob (34) is located at a fourth mode position, the magnet is not located adjacent any of the plurality of Hall-effect sensors (62) and thus, does not excite any of the plurality of Hall-effect sensors (62), wherein this lack of excitement of any of the plurality of Hall-effect sensors (62) indicates to the controller on the hand-held power tool (10) to operate in a fourth operation modes of the plurality of operation modes.

6. The hand-held power tool (10) of Claim 1, wherein the one or more sensor actuators (64) located on the control knob (34) are composed of two magnets and the plurality of sensors on the PCB (50) are composed of two Hall-effect sensors (62) that correspond to define four operation modes of the plurality of operation modes.

7. A hand-held power tool (10) comprising:
a motive source (20);
an output shaft protruding from an output end (24) of the motive source (20);
wherein the output shaft is functionally coupled to the motive source (20) such that the output shaft rotates in response to activation of the motive source (20) when the motive source (20) is supplied with power;
an endbell (46) located adjacent the motive source (20) opposite the output shaft;
a user interface (32) movable among a plurality of mode positions to select one of a plurality of operation modes of the motive source (20);
wherein the user interface (32) is accessible from exterior of the housing assembly;
wherein the user interface (32) is located adjacent the endbell (46) opposite the output shaft;
wherein the user interface (32) adjusts operation of the hand-held power tool (10) to the plurality of operation modes; and **characterized by**:
a printed circuit board (PCB) (50) located between the endbell (46) and the user interface (32);
wherein the PCB (50) is configured to interact with the user interface (32) to select one of the plurality of operation modes of the motive source;
further comprising a potentiometer (66) located on the PCB (50) wherein the potentiometer (66) is directed to the user interface, and a plunger (68) in communication with the user interface (32) and interacts with the potentiometer (66); and wherein the potentiometer (66) is configured to change an output current based on a variable resistance created by a relative location of the plunger (68) with respect to the potentiometer (66).

8. The hand-held power tool (10) of Claim 1 or 7, wherein the PCB (50) includes a shield to mitigate interference to the motive source (20).

9. The hand-held power tool of Claim 7,
wherein the user interface includes a control knob which is rotatable about a knob axis to the plurality of mode positions.

10. The hand-held power tool (10) of Claim 7, wherein the potentiometer (66) is an arcuate potentiometer (66).

11. The hand-held power tool (10) of Claim 9, further comprising a membrane (70), wherein the membrane (70) is located between the potentiometer (66) and the plunger (68);
preferably, wherein the plunger (68) is positioned on the control knob (34) such that the plunger (68) contacts the membrane (70) and configured to change the resistance of the potentiometer (66) based on the relative location of the plunger (68) with respect to the potentiometer (66) and the membrane (70); and
preferably, wherein when the plunger (68) is contacting the membrane (70) at a first position the potentiometer (66) has a first resistance that is sent to a controller to indicate a first operation mode of the plurality of operation modes, wherein when the plunger (68) is contacting the membrane (70) at a second position the potentiometer (66) has a second resistance that is sent to the controller to indicate a second operation mode of the plurality of operation modes, wherein when the plunger (68) is contacting the membrane (70) at a third position the potentiometer (66) has a third resistance that is sent to the controller to indicate a third operation mode of the plurality of operation modes, and wherein when the plunger (68) is contacting the membrane (70) at a fourth position the potentiometer (66) has a fourth resistance that is sent to the controller to indicate a fourth operation mode of the plurality of operation modes.

## Patentansprüche

1. Handgehaltenes Elektrowerkzeug (10), umfassend:
eine Antriebsquelle (20);
eine Ausgangswelle, die von einem Ausgangsende (24) der Antriebsquelle (20) hervorsteht; wobei die Ausgangswelle funktionell mit der Antriebsquelle (20) gekoppelt ist, sodass die Ausgangswelle als Reaktion auf eine Aktivierung der Antriebsquelle (20) dreht, wenn die Antriebsquelle (20) mit Energie versorgt wird;
ein Endgehäuse (46), das anliegend an der Antriebsquelle (20) gegenüber der Ausgangswelle angeordnet ist;
eine Benutzeroberfläche (32), die zwischen einer Vielzahl von Moduspositionen beweglich ist, um einen einer Vielzahl von Betriebsmodi der Antriebsquelle (20) auszuwählen;
wobei die Benutzeroberfläche (32) von der Außenseite der Gehäuseanordnung zugänglich ist;
wobei die Benutzeroberfläche (32) anliegend an dem Endgehäuse (46) gegenüber der Ausgangswelle angeordnet ist;
wobei die Benutzeroberfläche (32) einen Betrieb des handgehaltenen Elektrowerkzeugs (10) auf die Vielzahl von Betriebsarten einstellt; und
**gekennzeichnet durch**:
eine Leiterplatte (printed circuit board, PCB) (50), die sich zwischen dem Endgehäuse (46) und der Benutzeroberfläche befindet;
wobei die Leiterplatte (50) konfiguriert ist, um mit der Benutzeroberfläche (32) zu interagieren, um einen der Vielzahl von Betriebsmodi der Antriebsquelle auszuwählen, und wobei die Leiterplatte (50) eine Vielzahl von Sensoren aufweist, die auf der Leiterplatte (50) positioniert sind, wobei jeder der Vielzahl von Sensoren eine Stelle von einer der Vielzahl von Moduspositionen identifiziert;
ferner umfassend einen oder mehrere Sensoraktuatoren (64), die sich auf der Benutzeroberfläche (32) befinden, wobei der eine oder die mehreren Sensoraktuatoren (64) auf eine Position bewegt werden können, die einem der Vielzahl von Sensoren entspricht, die einer Stelle einer der Vielzahl von Moduspositionen entsprechen;
wobei die Benutzeroberfläche (32) einen Steuerknopf (34) beinhaltet, der um eine Knopfachse auf die Vielzahl von Moduspositionen gedreht werden kann;
wobei der eine oder die mehreren Sensoraktuatoren (64) an dem Steuerknopf (34) angeordnet sind; und
wobei die Vielzahl von Sensoren und der eine oder die mehreren Sensoraktoren (64) keinen physischen Kontakt machen.

2. Handgehaltenes Elektrowerkzeug (10) gemäß Anspruch 1, wobei die Vielzahl von Sensoren Hall-Effekt-Sensoren (62) sind.

3. Handgehaltenes Elektrowerkzeug (10) gemäß Anspruch 2, wobei der eine oder die mehreren Sensoraktuatoren (64) mindestens ein Magnet sind, wobei der mindestens eine Magnet selektiv neben einem der mehreren Hall-Effekt-Sensoren (62) angeordnet werden kann, der der Stelle eines der Vielzahl von Moduspositionen entspricht.

4. Handgehaltenes Elektrowerkzeug (10) gemäß Anspruch 2, wobei der eine oder die mehreren Sensoraktuatoren (64) ein Magnet sind, wobei der Magnet selektiv anliegend an einen der Vielzahl von Hall-Effekt-Sensoren (62) positioniert werden kann, wobei ein Magnetfeld, das durch den Magneten erzeugt wird, wenn er sich anliegend an einem ersten der Vielzahl von Hall-Effekt-Sensoren (62) befindet, den ersten der Vielzahl von Hall-Effekt-Sensoren (62) erregt, um einer Steuerung auf dem handgehaltenen Elektrowerkzeug (10) anzugeben, in einem ersten Betriebsmodus der Vielzahl von Betriebsmodi zu arbeiten, wobei ein Magnetfeld, das durch den Magneten erzeugt wird, wenn er sich anliegend an einem zweiten der Vielzahl von Hall-Effekt-Sensoren (62) befindet, den zweiten der Vielzahl von Hall-Effekt-Sensoren (62) erregt, um der Steuerung auf dem handgehaltenen Elektrowerkzeug (10) anzugeben, in einem zweiten Betriebsmodus der Vielzahl von Betriebsmodi zu arbeiten, und wobei ein Magnetfeld, das durch den Magneten erzeugt wird, wenn er sich anliegend an einem dritten der Vielzahl von Hall-Effekt-Sensoren (62) befindet, den dritten der Vielzahl von Hall-Effekt-Sensoren (62) erregt, um der Steuerung auf dem handgehaltenen Elektrowerkzeug (10) anzugeben, in einer dritten Betriebsart der Vielzahl von Betriebsarten zu arbeiten.

5. Handgehaltenes Elektrowerkzeug (10) gemäß Anspruch 4, wobei, wenn sich der Steuerknopf (34) in einer vierten Modusposition befindet, der Magnet nicht anliegend an einem der Vielzahl von Hall-Effekt-Sensoren (62) angeordnet ist und somit keinen der Vielzahl von Hall-Effekt-Sensoren (62) erregt, wobei diese fehlende Erregung eines der Vielzahl von Hall-Effekt-Sensoren (62) dem Steuergerät auf dem handgehaltenen motorgetriebenen Werkzeug (10) angibt, in einem vierten Betriebsmodus der Vielzahl von Betriebsmodi zu arbeiten.

6. Handgehaltenes Elektrowerkzeug (10) gemäß Anspruch 1, wobei der eine oder die mehreren Sensoraktuatoren (64), die sich an dem Steuerknopf (34) befinden, aus zwei Magneten bestehen und die Vielzahl von Sensoren auf der Leiterplatte (50) aus zwei Hall-Effekt-Sensoren (62) bestehen, die vier Betriebsarten der Vielzahl von Betriebsarten definieren.

7. Handgehaltenes Elektrowerkzeug (10), umfassend:
eine Antriebsquelle (20);
eine Ausgangswelle, die von einem Ausgangsende (24) der Antriebsquelle (20) hervorsteht; wobei die Ausgangswelle funktionell mit der Antriebsquelle (20) gekoppelt ist, sodass die Ausgangswelle als Reaktion auf eine Aktivierung der Antriebsquelle (20) dreht, wenn die Antriebsquelle (20) mit Energie versorgt wird;
ein Endgehäuse (46), das anliegend an der Antriebsquelle (20) gegenüber der Ausgangswelle angeordnet ist;
eine Benutzeroberfläche (32), die zwischen einer Vielzahl von Moduspositionen beweglich ist, um einen einer Vielzahl von Betriebsmodi der Antriebsquelle (20) auszuwählen;
wobei die Benutzeroberfläche (32) von der Außenseite der Gehäuseanordnung zugänglich ist;
wobei die Benutzeroberfläche (32) anliegend an dem Endgehäuse (46) gegenüber der Ausgangswelle angeordnet ist;
wobei die Benutzeroberfläche (32) einen Betrieb des handgehaltenen Elektrowerkzeugs (10) auf die Vielzahl von Betriebsarten einstellt; und
**gekennzeichnet durch**:
eine Leiterplatte (printed circuit board, PCB) (50), die sich zwischen dem Endgehäuse (46) und der Benutzeroberfläche (32) befindet;
wobei die Leiterplatte (50) konfiguriert ist, um mit der Benutzeroberfläche (32) zu interagieren, um einen der Vielzahl von Betriebsmodi der Antriebsquelle auszuwählen;
ferner umfassend ein Potentiometer (66), das sich auf der Leiterplatte (50) befindet, wobei das Potentiometer (66) auf die Benutzeroberfläche gerichtet ist, und einen Stößel (68), der in Kommunikation mit der Benutzeroberfläche (32) ist und mit dem Potentiometer (66) interagiert; und wobei das Potentiometer (66) konfiguriert ist, um einen Ausgangsstrom basierend auf einem variablen Widerstand zu ändern, der durch eine relative Position des Stößels (68) in Bezug auf das Potentiometer (66) erzeugt wird.

8. Handgehaltenes Elektrowerkzeug (10) gemäß Anspruch 1 oder 7, wobei die Leiterplatte (50) eine Abschirmung beinhaltet, um eine Interferenz auf die Antriebsquelle (20) abzuschwächen.

9. Handgehaltenes Elektrowerkzeug gemäß Anspruch 7,
wobei die Benutzeroberfläche einen Steuerknopf beinhaltet, der um eine Knopfachse auf die Vielzahl von Moduspositionen gedreht werden kann.

10. Handgehaltenes Elektrowerkzeug (10) gemäß Anspruch 7, wobei das Potentiometer (66) ein bogenförmiges Potentiometer (66) ist.

11. Handgehaltenes Elektrowerkzeug (10) gemäß Anspruch 9, ferner umfassend eine Membran (70), wobei die Membran (70) zwischen dem Potentiometer (66) und dem Stößel (68) angeordnet ist;
vorzugsweise wobei der Stößel (68) an dem Steuerknopf (34) positioniert ist, sodass der Stößel (68) die Membran (70) berührt, und konfiguriert ist, um den Widerstand des Potentiometers (66) basierend auf der relativen Stelle des Stößels (68) in Bezug auf das Potentiometer (66) und die Membran (70) zu ändern; und vorzugsweise wobei, wenn der Stößel (68) die Membran (70) an einer ersten Position berührt, das Potentiometer (66) einen ersten Widerstand aufweist, der an eine Steuerung gesendet wird, um einen ersten Betriebsmodus der Vielzahl von Betriebsmodi anzugeben, wobei, wenn der Kolben (68) die Membran (70) an einer zweiten Position berührt, das Potentiometer (66) einen zweiten Widerstand aufweist, der an die Steuerung gesendet wird, um einen zweiten Betriebsmodus der Vielzahl von Betriebsmodi anzugeben, wobei, wenn der Kolben (68) die Membran (70) an einer dritten Position berührt, das Potentiometer (66) einen dritten Widerstand aufweist, der an die Steuerung gesendet wird, um einen dritten Betriebsmodus der Vielzahl von Betriebsmodi anzugeben, und wobei, wenn der Kolben (68) die Membran (70) an einer vierten Position berührt, das Potentiometer (66) einen vierten Widerstand aufweist, der an die Steuerung gesendet wird, um einen vierten Betriebsmodus der Vielzahl von Betriebsmodi anzugeben.

## Revendications

1. Un outil électrique portatif (10) comprenant :
une source motrice (20) ;
un arbre de sortie faisant saillie à partir d'une extrémité de sortie (24) de la source motrice (20) ;
dans lequel l'arbre de sortie est couplé fonctionnellement à la source motrice (20) de sorte que l'arbre de sortie tourne en réponse à l'activation de la source motrice (20) lorsque la source motrice (20) est alimentée en énergie ;
une cloche d'extrémité (46) située de manière adjacente à la source motrice (20) opposée à l'arbre de sortie ;
une interface utilisateur (32) pouvant se déplacer parmi une pluralité de positions de mode pour sélectionner un parmi une pluralité de modes de fonctionnement de la source motrice (20) ;
dans lequel l'interface utilisateur (32) est accessible à partir de l'extérieur de l'ensemble boîtier ;
dans lequel l'interface utilisateur (32) est située de manière adjacente à la cloche d'extrémité (46) opposée à l'arbre de sortie ;
dans lequel l'interface utilisateur (32) ajuste le fonctionnement de l'outil électrique portatif (10) à la pluralité de modes de fonctionnement ; et **caractérisé par** :
une carte de circuit imprimé (PCB) (50) située entre la cloche d'extrémité (46) et l'interface utilisateur ;
dans lequel la carte de circuit imprimé (50) est configurée pour interagir avec l'interface utilisateur (32) pour sélectionner un parmi la pluralité de modes de fonctionnement de la source motrice et dans lequel la carte de circuit imprimé (50) comprend une pluralité de capteurs positionnés sur la carte de circuit imprimé (50) dans lequel chacun de la pluralité de capteurs identifie un emplacement d'une parmi la pluralité de positions de mode ;
comprenant en outre un ou plusieurs actionneurs de capteur (64) situés sur l'interface utilisateur (32), dans lequel l'un ou les plusieurs actionneurs de capteur (64) peuvent se déplacer vers une position qui correspond à un parmi la pluralité de capteurs qui correspondent à un emplacement d'une parmi la pluralité de positions de mode ;
dans lequel l'interface utilisateur (32) comprend un bouton de contrôle (34) qui peut tourner autour d'un axe de bouton vers la pluralité de positions de mode ;
dans lequel l'un ou les plusieurs actionneurs de capteur (64) sont situés sur le bouton de contrôle (34) ; et
dans lequel la pluralité de capteurs et l'un ou les plusieurs actionneurs de capteur (64) n'entrent pas en contact physique.

2. L'outil électrique portatif (10) selon la revendication 1, dans lequel la pluralité de capteurs sont des capteurs à effet Hall (62).

3. L'outil électrique portatif (10) selon la revendication 2, dans lequel l'un ou les plusieurs actionneurs de capteur (64) sont au moins un aimant, dans lequel l'au moins un aimant peut être placé sélectivement de manière adjacente à un parmi la pluralité de capteurs à effet Hall (62) qui correspond à l'emplacement d'une parmi la pluralité de positions de mode.

4. L'outil électrique portatif (10) selon la revendication 2, dans lequel l'un ou les plusieurs actionneurs de capteur (64) est un aimant, dans lequel l'aimant peut être placé sélectivement de manière adjacente à un parmi la pluralité de capteurs à effet Hall (62), dans lequel un champ magnétique généré par l'aimant lorsqu'il est situé de manière adjacente à un premier parmi la pluralité de capteurs à effet Hall (62) excite le premier parmi la pluralité de capteurs à effet Hall (62) pour indiquer à un contrôleur sur l'outil électrique portatif (10) de fonctionner dans un premier mode de fonctionnement parmi la pluralité de modes de fonctionnement, dans lequel un champ magnétique généré par l'aimant lorsqu'il est situé de manière adjacente à un deuxième parmi la pluralité de capteurs à effet Hall (62) excite le deuxième parmi la pluralité de capteurs à effet Hall (62) pour indiquer au contrôleur sur l'outil électrique portatif (10) de fonctionner dans un deuxième mode de fonctionnement parmi la pluralité de modes de fonctionnement, et dans lequel un champ magnétique généré par l'aimant lorsqu'il est situé de manière adjacente à un troisième parmi la pluralité de capteurs à effet Hall (62) excite le troisième parmi la pluralité de capteurs à effet Hall (62) pour indiquer au contrôleur sur l'outil électrique portatif (10) de fonctionner dans un troisième mode de fonctionnement parmi la pluralité de modes de fonctionnement.

5. L'outil électrique portatif (10) selon la revendication 4, dans lequel lorsque le bouton de contrôle (34) est situé à une quatrième position de mode, l'aimant n'est situé de manière adjacente à aucun parmi la pluralité de capteurs à effet Hall (62) et ainsi, n'excite aucun parmi la pluralité de capteurs à effet Hall (62), dans lequel ce manque d'excitation de l'un quelconque de la pluralité de capteurs à effet Hall (62) indique au contrôleur sur l'outil électrique portatif (10) de fonctionner dans un quatrième mode de fonctionnement parmi la pluralité de modes de fonctionnement.

6. L'outil électrique portatif (10) selon la revendication 1, dans lequel l'un ou les plusieurs actionneurs de capteur (64) situés sur le bouton de contrôle (34) sont composés de deux aimants et la pluralité de capteurs sur la carte de circuit imprimé (50) sont composés de deux capteurs à effet Hall (62) qui correspondent pour définir quatre modes de fonctionnement parmi la pluralité de modes de fonctionnement.

7. Un outil électrique portatif (10) comprenant :
une source motrice (20) ;
un arbre de sortie faisant saillie à partir d'une extrémité de sortie (24) de la source motrice (20) ;
dans lequel l'arbre de sortie est couplé fonctionnellement à la source motrice (20) de sorte que l'arbre de sortie tourne en réponse à l'activation de la source motrice (20) lorsque la source motrice (20) est alimentée en énergie ;
une cloche d'extrémité (46) située de manière adjacente à la source motrice (20) opposée à l'arbre de sortie ;
une interface utilisateur (32) pouvant se déplacer parmi une pluralité de positions de mode pour sélectionner un parmi une pluralité de modes de fonctionnement de la source motrice (20) ;
dans lequel l'interface utilisateur (32) est accessible à partir de l'extérieur de l'ensemble boîtier ;
dans lequel l'interface utilisateur (32) est située de manière adjacente à la cloche d'extrémité (46) opposée à l'arbre de sortie ;
dans lequel l'interface utilisateur (32) ajuste le fonctionnement de l'outil électrique portatif (10) à la pluralité de modes de fonctionnement ; et **caractérisé par** :
une carte de circuit imprimé (PCB) (50) située entre la cloche d'extrémité (46) et l'interface utilisateur (32) ;
dans lequel la carte de circuit imprimé (50) est configurée pour interagir avec l'interface utilisateur (32) pour sélectionner un parmi la pluralité de modes de fonctionnement de la source motrice ;
comprenant en outre un potentiomètre (66) situé sur la carte de circuit imprimé (50) dans lequel le potentiomètre (66) est dirigé vers l'interface utilisateur, et un piston (68) en communication avec l'interface utilisateur (32) et interagit avec le potentiomètre (66) ; et dans lequel le potentiomètre (66) est configuré pour modifier un courant de sortie sur la base d'une résistance variable créée par un emplacement relatif du piston (68) par rapport au potentiomètre (66).

8. L'outil électrique portatif (10) selon la revendication 1 ou 7, dans lequel la carte de circuit imprimé (50) comprend un blindage pour atténuer les interférences vers la source motrice (20).

9. L'outil électrique portatif (10) selon la revendication 7,
dans lequel l'interface utilisateur comprend un bouton de contrôle qui peut tourner autour d'un axe de bouton vers la pluralité de positions de mode.

10. L'outil électrique portatif (10) selon la revendication 7, dans lequel le potentiomètre (66) est un potentiomètre arqué (66).

11. L'outil électrique portatif (10) selon la revendication 9, comprenant en outre une membrane (70), dans lequel la membrane (70) est située entre le potentiomètre (66) et le piston (68) ;
de préférence, dans lequel le piston (68) est positionné sur le bouton de contrôle (34) de sorte que le piston (68) entre en contact avec la membrane (70) et configuré pour modifier la résistance du potentiomètre (66) sur la base de l'emplacement relatif du piston (68) par rapport au potentiomètre (66) et à la membrane (70) ; et
de préférence, dans lequel lorsque le piston (68) est en contact avec la membrane (70) à une première position, le potentiomètre (66) a une première résistance qui est envoyée à un contrôleur pour indiquer un premier mode de fonctionnement parmi la pluralité de modes de fonctionnement, dans lequel lorsque le piston (68) est en contact avec la membrane (70) à une deuxième position, le potentiomètre (66) a une deuxième résistance qui est envoyée au contrôleur pour indiquer un deuxième mode de fonctionnement parmi la pluralité de modes de fonctionnement, dans lequel lorsque le piston (68) est en contact avec la membrane (70) à une troisième position, le potentiomètre (66) a une troisième résistance qui est envoyée au contrôleur pour indiquer un troisième mode de fonctionnement parmi la pluralité de modes de fonctionnement, et dans lequel lorsque le piston (68) est en contact avec la membrane (70) à une quatrième position, le potentiomètre (66) a une quatrième résistance qui est envoyée au contrôleur pour indiquer un quatrième mode de fonctionnement parmi la pluralité de modes de fonctionnement.
